# EUROPÄISCHE PATENTSCHRIFT

(11) **EP 1 302 520 B1**
(45) Veröffentlichungstag und Bekanntmachung des Hinweises auf die Patenterteilung: **23.03.2005**
(21) Anmeldenummer: 02022764.1
(22) Anmeldetag: 11.10.2002
(51) Int. Cl.: C09J 7/02, B32B 27/06

(54) **Release-Folie**
Release film
Film détachable

(30) Priorität: 11.10.2001 DE 10150028
(43) Veröffentlichungstag der Anmeldung: 16.04.2003
(73) Patentinhaber: Nordenia Deutschland Gronau GmbH, 48599 Gronau (DE)
(72) Erfinder: Schwinn, Georg, 48599 Gronau (DE)
(74) Vertreter: Albrecht, Rainer Harald, Dr.-Ing.

(56) Entgegenhaltungen:
- DE-A- 19 548 265
- US-A- 4 895 761

## Beschreibung

Die Erfindung betrifft eine Release-Folie mit einem Kunststoffträger und einer Silikonbeschichtung, die eine Schicht geringer Haftung gegen eine Klebstoffschicht eines aufkaschierten Substrates bildet.

Es besteht seit vielen Jahren ein steigernder Bedarf an selbstklebenden Produkten, wie z.B. Etiketten, Klebebändern und Klebefolien für den Bau. Die Klebstoffschicht dieser selbstklebenden Produkte wird zumeist mit einer abziehbaren Folie bedeckt, welche als Release-Folie bezeichnet wird. Durch ihre Silikonbeschichtung kann die Release-Folie leicht von der Klebstoffschicht entfernt werden. Neben der Abdeckfunktion muss die Release-Folie insbesondere bei Etiketten auch eine Trägerfunktion erfüllen, welches das automatische oder manuelle Spenden vorgestanzter Etiketten ermöglicht.

In der Praxis verbreitet sind silikonbeschichtete Release-Papiere, die sich aufgrund ihrer Dicke und Steifigkeit gut handhaben lassen. Nachteilig ist die Rauhigkeit des Papierträgers. Ferner werden sie wegen der fehlender Transparenz bei hochtransparenten Etiketten aus optischen Gründen nicht eingesetzt, da sich ein erwünschter "Non-Label-Look" nicht einstellt. In US 6 210 767 wird ein Trennschichtträger auf Papierbasis mit einer Oberflächenbeschichtung aus Polypropylen oder Polypropylen-Copolymeren beschrieben. Die Silikonschicht ist auf die beschichtete Oberfläche des Papierträgers aufgetragen.

Aus DE 195 48 265 A1 ist eine Release-Folie bekannt, die einen Kunststoffträger aufweist. Der Kunststoffträger besteht aus einer verstreckten thermoplastischen Polyolefinfolie, die durch eine polymere Oberflächenbeschichtung veredelt ist. Die in einer geringen Schichtdicke aufgetragene Oberflächenbeschichtung besteht vorzugsweise aus Polyethylen oder Polypropylen und soll das Stanz- und Gleitverhalten der Release-Folie günstig beeinflussen.

Viele klebstoffbeschichtete Produkte, deren Klebstoffschicht mit einer Release-Folie abgedeckt ist, enthalten in der Klebstoffschicht neben Hotmeltkleber sogenannte Tackifier, die dem erkalteten Hotmeltkleber die Klebeeigenschaften verleihen. Derartige Tackifier, aber auch andere Wachs-, Öl- oder fettartige niedermolekulare Substanzen der Klebstoffschicht, im Folgenden als migrierende Substanzen bezeichnet, sind in der Lage, übliche Abdeckfolien auf Basis von Polyethylen zu durchdringen. Die so nach außen gelangenden migrierenden Substanzen, die ihre Adhäsion erzeugenden Eigenschaften nicht verloren haben, können zum Verkleben einzelner Produkteinheiten untereinander führen.

Häufig werden mit Release-Folien versehene Produkte in Folien auf Polyethylenbasis verpackt, was zur Folge haben kann, dass migrierende Substanzen der Klebstoffschicht nicht nur die Release-Folie, sondern auch die äußere Verpackungsfolie durchdringen. Die Packungen können daher im Bereich der Polyethylenfolien miteinander verkleben. Dies beeinträchtigt den Gebrauch der Produkte, da beim Öffnen einer einzelnen Verpackung eine mit dieser verklebte Verpackung ebenfalls aufreißen kann bzw. beim Öffnen einer mit der Release-Folie von innen verklebten Verpackung sich die Release-Folie vorzeitig ablösen kann und die Klebstoffschicht freigelegt wird.

Um das Tackifierharz oder die anderen migrierenden Klebstoffbestandteile am Migrieren durch Folien zu hindern, werden Release-Folien mit speziellen Barrieren, z.B. Metallfolien, versehen. Metallschichten enthaltende Folien, z.B. Aluminium enthaltende Folien oder Folien auf Polyamid- oder Polyacrylbasis, die auch als Barrierefolien verwendet werden, sind teuer.

Der Erfindung liegt die Aufgabe zugrunde, eine Release-Folie anzugeben, die transparent ist und die Migration niedermolekularer organischer Substanzen aus der Klebstoffschicht wirksam verhindert.

Ausgehend von einer Release-Folie mit den eingangs beschriebenen Merkmalen wird die Aufgabe erfindungsgemäß dadurch gelöst, dass der Kunststoffträger eine Barriereschicht aus einem Ethylen-Vinyl-Acetat-Copolymer, Ethylen-(Meth)acrylsäure-Copolymer oder Styrolblockcopolymer oder Mischungen dieser Komponenten zur Absorption migrierender Substanzen aus der Klebstoffschicht aufweist. Die Wirkung der Barriereschicht beruht darauf, dass die migrierenden Substanzen absorbiert bzw. in der Barriereschicht gebunden werden. Es versteht sich, dass die Barriereschicht eine zu diesem Zweck ausreichende Schichtstärke aufweisen muss. Die erforderliche Schichtstärke der Barriereschicht ist abhängig von der Klebstoffzusammensetzung und der Dicke der Klebstoffschicht und kann anhand weniger orientierender Versuche festgelegt werden. Im Allgemeinen ausreichend ist eine Schichtdicke, die mindestens 30% der Dicke der Klebstoffschicht beträgt, wobei ein Mindestwert von 5 µm nicht unterschritten werden darf. Als Styrolblockcopolymer eignen sich insbesondere Styrol-Ethylen-Styrolblockcopolymere, Styrol-(Ethylen-1-buten)-Styrol-Copolymere und Styrol-Isopren-Styrol-Copolymere.

Die Silikonschicht steht als gut ablösbare Schicht mit der Klebstoffschicht in Kontakt. Als Silikonschicht sind beispielsweise die üblichen Silikon-Liner-Materialien wie Triorganosiloxanderivate, Dimethylsiloxan-Systeme, endblockierte Polyorganosiloxane, Methylvinylpolysiloxane, acrylierte Organopolysiloxane einsetzbar, wie sie beispielsweise unter dem Markennamen SYL-OFF® (DOW CORNING Co., USA) angeboten werden. Das Silikonisieren erfolgt aus wässriger oder organischer Lösungsmittel-Phase oder lösungsmittelfrei in Mengen von ca. 0,3 g/m² bis 1,5 g/m².

Durchdringt eine migrierende Substanz aus der Klebschicht die Silikonschicht, so trifft sie auf die absorbierende Barriereschicht, die durch ihre Zusammensetzung und Schichtdicke eine große Affinität und Bindefähigkeit gegenüber den migrierenden Substanzen aufweist. Durch Aufnahme und Bindung der migrierenden Substanzen wird verhindert, dass diese nach außen gelangen.

Gemäß einer bevorzugten Ausführung der Erfindung wird der Kunststoffträger als Coextrusionsfolie ausgebildet, welche neben der Barriereschicht mindestens eine weitere Schicht aus coextrudierbarem Kunststoff, vorzugsweise aus einem Polyolefin, aufweist. Diese zusätzliche, zusammen mit der Barriereschicht coextrudierte Schicht ist zweckmäßig zwischen der Barriereschicht und der Silikonbeschichtung angeordnet. Sie besteht vorzugsweise aus einem oder mehreren Polyolefinen, insbesondere Polyethylen, Polypropylen oder Polybutylen. Die Polyolefinzwischenschicht kann zur Kompatibilitätssteigerung der Silikonschicht und der absorbierenden Barriereschicht beitragen. Hierdurch ergibt sich eine bessere Stabilität und Verarbeitbarkeit der Folie.

In weiterer Ausgestaltung lehrt die Erfindung, dass auf der zur Silikonbeschichtung abgewandten Seite der Barriereschicht eine Polyolefinschicht vorgesehen ist, welche die Barriereschicht abdeckt und zur Stabilisierung der Release-Folie beiträgt.

Gemäß einer bevorzugten Ausführung der Erfindung ist die Release-Folie vierschichtig ausgebildet und besteht aus einer Silikonschicht, gefolgt von einer Polyolefinschicht oder einer Schicht entsprechend geeigneter coextrudierbarer Kunststoffe, gefolgt von der absorbierenden Barriereschicht und einer weiteren Polyolefinschicht.

Die anhand einer Release-Folienanwendung ausführlich beschriebene Verwendung der absorbierenden Barriereschicht lässt sich auch - mutatis mutandis - auf Folien anwenden, die nicht mit einer Silikonschicht ausgestattet sind. So kann auch die absorbierende Barriereschicht auf einer oder auf beiden Seiten mit einer weiteren Schicht versehen sein, die ein Polyolefin enthält oder aus einem Polyolefin besteht. Damit können Kaschierverbunde hergestellt werden, bei der die vorbeschriebene dreischichtige Folie mit einem Klebstoff versehen wird, wobei aus dem Klebstoff austretende migrierfähige Substanzen durch die absorbierende Barriereschicht aufgenommen werden, so dass beim Aufrollen einer entsprechenden ausgeschilderten Bahnware keine Verblockung eintreten kann.

Schließlich sei darauf hingewiesen, dass auch bei Verpackungsanwendungen Beutel aus Folien hergestellt werden können, die aus der beschriebenen absorbierenden Barriereschicht und beidseitig angebrachten Polyolefin-Schichten bestehen. Eine solche dreischichtige Barrierefolie umfasst demnach eine Absorptionsschicht, die aus einem oder mehreren Polyolefincopolymeren und/oder Styrolblockcopolymeren besteht und eine Schichtdicke von mindestens 35 µm aufweist. Als absorbierende Komponenten sind auch hier Ethylen-Vinyl-Acetat-Copolymere, Ethylen-(Meth)acryl-säure-Copolymere, Styrol-Ethylen-Block-Copoylmere, Styrol-(Ethylen-1-buten)-Styrol-Copolymere oder Styrol-Isopren-Styrol-Copolymere oder Mischungen aus diesen Komponenten einsetzbar. Die Absorbtionsschicht dient dazu, aus dem Füllgut austretende migrierende Substanzen aufzunehmen, so dass sie nicht die Verpackungsbeutelfolie vollständig durchwandern und die Oberfläche des Beutels kontaminieren.

Im Folgenden wird die Erfindung anhand von Beispielen erläutert.

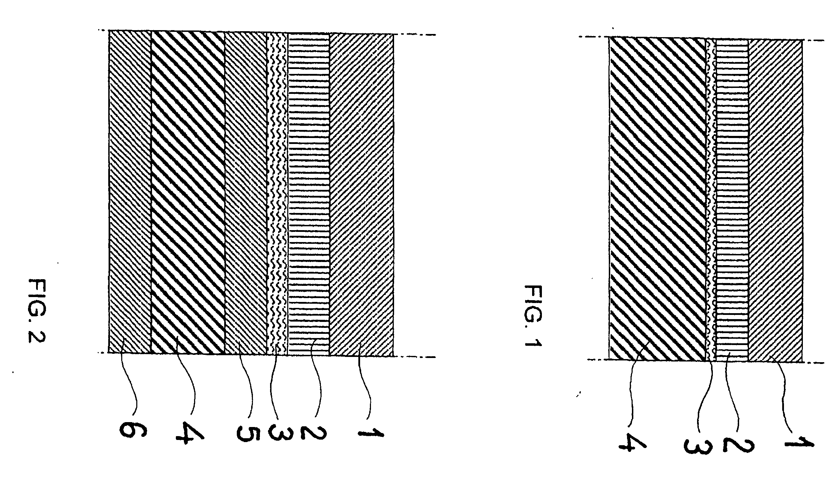

### Beispiel 1 mit Fig. 1:

In Fig. 1 ist eine Release-Folie mit einem Kunststoffträger und einer Silikonbeschichtung dargestellt. Der Kunststoffträger besteht aus einer durch Blasextrusion hergestellten Folie aus Ethylen-Vinyl-Acetat-Copolymer (60 Gew.% Ethylen; 40 Gew.% Vinylacetat), die eine absorbierende Barriereschicht 4 bildet. Die Barriereschicht 4 hat eine Dicke von 35 µm und ist mit einem Silikon von öliger Konsistenz lösungsmittelfrei beschichtet. Die Silikonschicht 3 weist eine Schichtdicke von 1,5 µm auf.

Auf die zweischichtige Release-Folie 3, 4 ist mit Hilfe einer 22 µm dicken Schicht 2 eines druckempfindlichen Klebstoffes ein Substrat 1 aus unverstrecktem HDPE mit einer Dicke von 30 µm aufkaschiert. Nach Abziehen des Substrates 1 kann dieses als Selbstklebeprodukt verwendet werden.

Aus der Klebstoffschicht 2 können migrierende Substanzen zwar die Silikonschicht 3 durchdringen, werden aber von der absorbierenden Barriereschicht 4 aufgefangen, so dass beispielsweise beim Aufwickeln einer Folienbahn des in Fig. 1 dargestellten Schichtenaufbaues kein Verblocken der einzelnen Lagen auftreten kann.

### Beispiel 2 mit Fig. 2:

Die in Fig. 2 dargestellte Release-Folie weist ein durch Blasextrusion hergestelltes dreischichtiges Coextrudat aus zwei außenliegenden, 20 µm dicken Polyethylen-Schichten 5, 6 aus LDPE und einer 40 µm dicken Barriereschicht aus extrudierbarem Ethylen-Vinyl-Acetat-Copolymer (75 Gew.% Ethylen; 25 Gew.% Vinylacetat) auf. Das den Kunststoffträger der Release-Folie bildende Coextrudat ist oberseitig mit einer Silikonbeschichtung 3 (aus einem vernetzbaren Silikon-Acrylat, dem verschiedene Vernetzungsmittel, u.a. EO-TMPTA, beigemischt sind) versehen. Nach einer Betatron-Vernetzungsbehandlung wurde auf die Silikonbeschichtung 3 eine Klebstoffschicht 2 aus abgekühltem Holtmeltklebstoff aufgetragen. Der Holtmeltklebstoff enthält 7 Gew.% eines Terpen-Oligomers als Tackifier. Ferner ist eine HDPE-Folie als Substrat 1 aufkaschiert worden. Nach Abziehen des Substrates ist dieses mit der Klebstoffschicht versehen und kann als Selbstklebeprodukt verwendet werden.

Es wurde beobachtet, dass nach einer Standzeit von 24 Stunden der Tackifier die Schichten 3, 5 der Release-Folie durchdringt und in die Absorptionsschicht 4 migriert. Hier wird der Tackifier gebunden, so dass die äußere PE-Schicht 6 nicht tangiert und durchdrungen wurde.

## Patentansprüche

1. Release-Folie mit einem Kunststoffträger und einer Silikonbeschichtung (3), die eine Schicht geringer Haftung gegen eine Klebstoffschicht (7) eines aufkaschierten Substrates bildet, **dadurch gekennzeich-net, dass** der Kunststoffträger eine Barriereschicht (4) aus Ethylen-Vinylacetat-Copolymeren, Ethylen-(Meth)acrylsäure-Copolymeren oder Styrolblockcopolymeren oder Mischungen dieser Komponenten zur Absorption migrierender Substanzen aus der Klebstoffschicht (2) aufweist.

2. Release-Folie nach Anspruch 1, **dadurch gekennzeichnet, dass** die absorbierende Barriereschicht (4) als Styrolblockcopolymer Styrol-Ethylen-Styrol-Blockcopolymer, Styrol-(Ethylen-1-buten)-Styrol-Copolymer, Styrol-Isopren-Styrol-Copolymer oder Mischungen dieser Komponenten enthält.

3. Release-Folie nach Anspruch 1 oder 2, **dadurch gekennzeichnet, dass** der Kunststoffträger als Coextrusionsfolie ausgebildet, welche neben der Barriereschicht (4) mindestens eine weitere Schicht (5, 6) aus einem coextrudierten Kunststoff, vorzugsweise aus einem Polyolefin, aufweist.

4. Release-Folie nach Anspruch 3, **dadurch gekennzeichnet, dass** zwischen der Barriereschicht (4) und der Silikonbeschichtung (3) eine Polyolefinzwischenschicht (5) angeordnet ist.

5. Release-Folie nach Anspruch 3 oder 4, **dadurch gekennzeichnet, dass** auf der zur Silikonbeschichtung (3) abgewandten Seite der Barriereschicht (4) eine formstabilisierende Polyolefinschicht (6) vorgesehen ist.

## Claims

1. A release film comprising a plastics support and a silicone coating (3) which forms a layer of low adhesion in relation to an adhesive layer (7) of a laminated-on substrate, **characterised in that** the plastics support comprises a barrier layer (4) of ethylene-vinyl acetate copolymers, ethylene-(meth)acrylic acid copolymers or styrene block copolymers, or mixtures of these components, for the absorption of substances migrating out of the adhesive layer (2).

2. A release film according to claim 1, **characterised in that** the absorbent barrier layer (4) contains, as a styrene block copolymer, a styrene-ethylene-styrene block copolymer, a styrene-(ethylene-1-butene)-styrene block copolymer, a styrene-isoprene-styrene block copolymer or mixtures of these components.

3. A release film according to claim 1 or 2, **characterised in that** the plastics support is formed as a coextruded film which apart from the barrier layer (4) comprises at least one further layer (5, 6) of a coextruded plastics material, preferably of a polyolefin.

4. A release film according to claim 3, **characterised in that** a polyolefin intermediate layer (5) is disposed between the barrier layer (4) and the silicone coating (3).

5. A release film according to claim 3 or 4, **characterised in that** a polyolefin layer (6) which imparts dimensional stability is provided on the side of the barrier layer (4) facing away from the silicone coating (3).

## Revendications

1. Film décollable avec un support de plastique et une stratification de silicone (3), lequel forme une couche d'adhérence moindre contre une couche d'adhésif (7) d'un substrat dissimulé, **caractérisé en ce que** le support de plastique présente une couche de barrage (4) de copolymères d'Ethylène-Vinylacétate, de copolymères d'Ethylène-Acide (Méth) acrylique ou de copolymères à blocs de Styrène ou d'autres combinaisons de ces composants pour absorber les substances migrantes de la couche d'adhésif (2).

2. Film décollable selon la revendication 1, **caractérisé en ce que** la couche de barrage (4) absorbante contient comme copolymère à blocs de Styrène un copolymère à blocs Styrène-Ethylène-Styrène, un copolymère Styrène-(Ethylène-1-butène)-Styrène, un copolymère Styrène-Isoprène-Styrène ou des combinaisons de ces composants.

3. Film décollable selon la revendication 1 ou 2, **caractérisé en ce que** le support de plastique est réalisé sous la forme d'un film de coextrusion, lequel présente à côté de la couche de barrage (4) au moins une couche supplémentaire (5, 6) constituée d'un plastique coextrudé, de préférence un polyoléfine.

4. Film décollable selon la revendication 3, **caractérisé en ce qu'**une couche intermédiaire de polyoléfine (5) est disposée entre la couche de barrage (4) et la stratification de silicone (3).

5. Film décollable selon la revendication 3 ou 4, **caractérisé en ce qu'**une couche de polyoléfine (6) stabilisatrice de forme est prévue sur le côté de la couche de barrage (4) qui se détourne de la stratification de silicone (3).
